# EUROPEAN PATENT SPECIFICATION

(11) **EP 1 863 254 B1**
(45) Date of publication and mention of the grant of the patent: **09.12.2009**
(21) Application number: 06114955.5
(22) Date of filing: 02.06.2006
(51) Int. Cl.: H04L 29/06

(54) **Negotiating VPN tunnel establishment parameters on user's interaction**
Aushandeln von VPN-Tunnelausbauparametern auf Nutzerinteraktion
Négociation de paramètres d'établissement de tunnel VPN sur une interaction de l'utilisateur

(43) Date of publication of application: 05.12.2007
(73) Proprietor: Research In Motion Limited, Waterloo, Ontario N2L 3W8 (CA)
(72) Inventor: Lai, Frederick Chee-Kiong, Waterloo Ontario N2V 2L1 (CA)
(74) Representative: Moore, Barry

(56) References cited:
- US-A1- 2002 046 348
- PAT R CALHOUN US ROBOTICS ACCESS CORP ELLIS WONG BAY NETWORKS ET AL: "Virtual Tunneling Protocol (VTP)" IETF STANDARD-WORKING-DRAFT, INTERNET ENGINEERING TASK FORCE, IETF, CH, July 1996 (1996-07), XP015011451 ISSN: 0000-0004

## Description

Some networks incorporate a VPN (virtual private network) server/gateway and permit authorized communication devices to access resources of the network via the VPN server/gateway. Such a communication device may be internal or external to the network, and in some cases may be itself a VPN server/gateway of another network. To connect to a VPN server/gateway as a VPN client, a communication device may include a VPN client function, usually in the form of a software component.

If the communication device has appropriate authorization, it may be able to initiate communication with the VPN server/gateway as a VPN client and to create a VPN tunnel between itself and the VPN server/gateway. Communication between the communication device and the VPN server/gateway over a VPN tunnel is authenticated and encrypted.

To form a VPN tunnel, the communication device and the VPN server/gateway may have to authenticate each other and provide each other with their authentication credentials. Authentication may be performed using any appropriate method, for example, a user name and a password, PAP (Password Authentication Protocol), CHAP (Challenge Handshake Authentication Protocol), MSCHAP (Microsoft CHAP), TACACS (Terminal Access Controller Access Control System), a digital certificate, an RSA (Rivest, Shamir, & Adleman) SecureID token, or RADIUS (Remote Authentication Dial-in User Service).

The communication device and the VPN server/gateway may generate shared encryption keys and may negotiate security policy identities, algorithms and other security properties. The communication device and the VPN server/gateway may generate keying material for bulk encryption and HMAC (Hashed Message Authentication Code) authentication, negotiate a VPN IP (Internet Protocol) address for the communication device and negotiate a lifetime for the encryption keys. In some cases, a second, shorter, lifetime is defined to terminate the tunnel in the case where it is not in use.

This information is passed to packet-processing modules in the communication device and in the VPN server/gateway in the form of *security associations* (inbound and outbound).

A VPN IP address lease time is usually a part of the IT (Information Technology) policy of an enterprise and may be programmed by a system administrator. A lease may expire, for example, after 8 hours if there is no IP traffic over the tunnel or after a few days if there is IP traffic over the tunnel.

Negotiation of a security association can last 10 seconds or longer, during which VPN communication between the communication device and the VPN server/gateway may not be possible. Some VPN-enabled devices can be configured to initiate renegotiation of a security association a predefined time before expiration of the keys.

The communication device may include applications that communicate time-sensitive information, such as VoIP (Voice over IP) communication and video teleconferencing. The communication device may be able to create a VPN tunnel to the VPN server/gateway and to connect to another communication service through the VPN server/gateway. For example, the communication device may connect to a communication server, e.g. a teleconferencing server or a VoIP server through the VPN server/gateway and to participate in communication sessions handled by the communication server.

If an encryption key or any other parameter of the tunnel connecting the communication device to the VPN server/gateway expires during such a time-sensitive communication session, the session may be interrupted for the length of time needed to reestablish the tunnel.

A communication device may store an application that is able to communicate time-sensitive information with a VPN server/gateway over a VPN tunnel, for example, audio, video and/or control information. A user of the communication device may interact with the device, for example, to launch the application or to generate an input to the application. An input to the application may be, for example, an identification of another communication device (e.g. a phone number) or a command for the application to initiate a communication session with the other communication device.

According to an embodiment of the invention, the communication device may commence a negotiation of at least one VPN tunnel establishment parameter, for example, an encryption key or an IP address, with the VPN server/gateway in response to an interaction of a user with the communication device. The communication device may begin the negotiation, for example, if at the time of the user interaction no VPN tunnel between the communication device and the VPN server/gateway exists.

In another example, the communication device may begin the negotiation if at the time of the interaction, a VPN tunnel exists between the communication device and the VPN server/gateway but one or more of the tunnel establishment parameters will expire in less than a predefined amount of time. By renegotiating the tunnel parameters immediately, the communication device may prevent the destruction of the VPN tunnel and the resulting interruption to a communication session during use of the application.

US patent application 2002/0046348 discusses a VPN Masquerade feature that is included in Linux's NAT (Network Address Translator) implementation, IP Masquerade. This feature provides interoperation of NAT with IKE and ESP tunnel mode within the IPSec security protocol suite. VPN Masquerade uses heuristics to route packets from a server on the Internet to a client on a local network that shares access to the Internet with other clients over a common access link through a router running NAT. VPN Masquerade, however, is susceptible to crashes, collisions and race conditions that can disable IPSec communication. These are prevented, or recovery from such is automatically effected, by sending over a tunnel a control packet, a "ping", from the client at one end of the tunnel to the server at the other end of the tunnel, and then waiting to send any packets other than a control packet over the tunnel until a responsive control packet is received from the server. The tunnel is defined by an epoch that comprises one security association (SA) in each direction that has a negotiated limited lifetime and defines the use of the ESP protocol in tunnel mode with negotiated authentication and/or encryption keys and a security parameters index (SPI) chosen by the SA's destination. If the client does not receive a response to the "ping" within a predetermined time, then it re-"pings" the server up to a predetermined number of times and, if no response is received, rekeys the tunnel. Further, the client "pings" the server if no packet is received on a tunnel for a predetermined period of time. By also configuring the server to wait to switch to a new epoch until it receives a "ping" from a client, certain race conditions can be eliminated. Alternatively, the client can be configured to ignore an attempt by the server to start a negotiation for rekeying the tunnel. Automatic recovery from a crash of the NAT is also provided by automatically starting a new IKE session if attempts to rekey a tunnel are not successful.

The document "Virtual Tunneling Protocol" published July 1996 by Pat R. Calhoun of US Robotics Access Corp. specifies a protocol which allows various Layer 2 and Layer 3 protocols to be tunneled through an IP network. VTP does not specify any change to the protocol to be tunneled. It describes the mechanisms for dynamically establishing and maintaining secure IP tunnels, and carrying multiprotocol data over those tunnels. VTP can be used in the implementation of Virtual Private Networks (VPNs).

According to a first aspect, the invention provides a method in a communication device that is able to establish a virtual private network 'VPN' tunnel with a VPN server/gateway, the method comprising: in response to an interaction of a user with a communication application of said device, triggering a renegotiation with said server/gateway of at least one establishment parameter of said tunnel if at the time of said interaction said VPN tunnel exists between said communication device and said VPN server/gateway, and if any establishment parameter of said tunnel will expire in less than a predefined amount of time, wherein said application is able to communicate audio, video, control and/or gaming information with said server/gateway over said tunnel.

According to another aspect, the invention provides a communication device adapted to perform the method of the invention.

### BRIEF DESCRIPTION OF THE DRAWINGS

Embodiments are illustrated by way of example and not limitation in the figures of the accompanying drawings, in which like reference numerals indicate corresponding, analogous or similar elements, and in which:

Figure 1 is a block diagram of a communication system, according to some embodiments of the invention; and

Figure 2 is a flowchart of an exemplary method according to some embodiments of the invention.

It will be appreciated that for simplicity and clarity of illustration, elements shown in the figures have not necessarily been drawn to scale. For example, the dimensions of some of the elements may be exaggerated relative to other elements for clarity.

### DESCRIPTION OF PREFERRED EMBODIMENTS

In the following detailed description, numerous specific details are set forth in order to provide a thorough understanding of embodiments. However it will be understood by those of ordinary skill in the art that the embodiments may be practiced without these specific details. In other instances, well-known methods, procedures, components and circuits have not been described in detail so as not to obscure the embodiments.

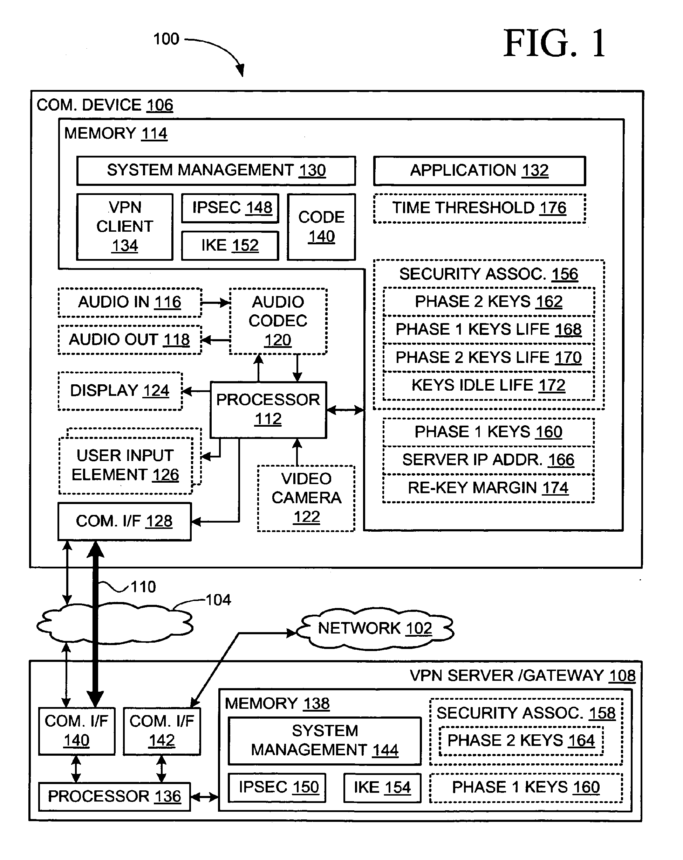

Reference is made now to Figure 1, which is a block diagram of a communication system 100, according to an embodiment of the invention. System 100 includes networks 102 and 104, a communication device 106 and a VPN server/gateway 108. Device 106 is able to communicate with VPN server/gateway 108 by way of network 104, and may be able to communicate with network 102 by way of VPN server/gateway 108 if it manages to establish a communication tunnel 110 with VPN server/gateway 108 over network 104. For example, network 104 may be the internal network of an enterprise, network 102 may be a shared or public network such as the Internet, and communication tunnel 110 may enable device 106 to communicate securely and authentically with the internal network when outside the enterprise.

Device 106 includes a processor 112 and a memory 114 coupled to processor 112. Device 106 includes an audio input element 116, for example a microphone, an audio output element 118, for example, a speaker, and an audio coder-decoder (codec) 120. Device 106 may optionally include a video camera 122, coupled to processor 112.

Device 106 includes a display 124 coupled to processor 112. Device 106 also includes one or more user input elements 126 coupled to processor 112. A non-exhaustive list of examples for user input elements 126 includes a keyboard, a joystick, a trackball and a thumbwheel. Any of input elements 126 may be embedded in full or in part within display 124, e.g. display 124 may be a touch screen.

Device 106 includes a communication interface 128, which is compatible with one or more wireless and/or wired communication standards and coupled to processor 112. By way of interface 128, device 106 may be able to communicate with network 104.

It should be understood that the architecture of device 106 is merely an example and that embodiments of the invention are applicable to communication devices having any other architecture. For example, a communication device may not include audio elements and/or a camera and/or a display and/or user input elements but rather may be connectable to external such elements.

Memory 114 stores a system management application module 130 and an application module 132, and a VPN client 134. Application module 132 is adapted to communicate time-sensitive information, for example, audio, video, control information and/or gaming information. Examples for application module 132 include a VoIP (Voice over Internet Protocol) application, a voice streaming application, a VoIP phone application, a teleconferencing application, a video streaming application and any other suitable application.

VPN server/gateway 108 includes a processor 136 and a memory 138 coupled to processor 136. VPN server/gateway 108 includes communication interfaces 140 and 142, each of which is compatible with one or more wireless and/or wired communication standards and is coupled to processor 136. By way of interface 140, VPN server/gateway 108 is able to communicate with network 104. By way of interface 142, VPN server/gateway 108 is able to communicate with network 102. Memory 138 stores a system management application module 144.

VPN server/gateway 108 and VPN client 134 are able to negotiate creation of VPN tunnel 110 using any one or more current or future technologies. The following are some exemplary technologies that may be used to secure VPN tunnel 110:
- IPSEC (Internet Protocol Security) with encryption in either tunnel or transport modes. The security associations can be set up either manually or using IKE (Internet Key Exchange) with either certificates or shared secrets. IPSEC is described in many RFCs (Requests for Comments), including 2401, 2406, 2407, 2408, and 2409 (for IKEv1), and 4301, 4303, 4306, 4307, and 4308 (for IKEv2).
- IPSEC inside of L2TP (Layer 2 tunneling protocol) as described in RFC 3193.
- SSL (Secure Sockets Layer) 3.0 or TLS (Transport Layer Security) with encryption. TLS is described in RFC 2246.

In the following description, IPSEC is used as an example, however, it would be obvious to one skilled in the art how to implement embodiments of the invention with any other technology. In this example, memories 114 and 138 store IPSEC packet processing modules 148 and 150, respectively, and IKE modules 152 and 154, respectively. IKE modules 152 and 154 may function at least for creating security associations 156 and 158 in memories 114 and 138, respectively. IPSEC modules 148 and 150 require security associations 156 and 158, respectively, for securing communication packets over tunnel 110.

The IKE protocol is defined to create security associations and it does this in two phases. In the first phase, communication device 106 and VPN server/gateway 108 authenticate each other and provide each other with their authentication credentials. In addition, using the Diffie-Hellman algorithm, "phase 1" shared keys 160 are generated and are stored in memories 114 and 138. In the second phase, IKE modules 152 and 154 negotiate security policy identities, algorithms and other security properties, and generate "phase 2" keys 162 and 164, respectively, for bulk encryption and HMAC (Hashed Message Authentication Code) authentication. This information is stored in security associations 156 and 158.

The IKE protocol defines main mode and aggressive mode for phase 1 exchange. It defines quick mode for phase 2. In the main mode, the user/machine identities are protected. It takes six UDP (User Datagram Protocol) messages to complete phase 1. In aggressive mode, the user/machine identities are sent in the clear and the transaction is completed in three UDP messages.

In the main mode, the parties (e.g. device 106 and VPN server/gateway 108) use the first two messages to negotiate security properties for phase 1 and phase 2 exchanges. Both parties perform a Diffie-Hellman key exchange in the next two messages. In addition, they exchange nonces, which are used later to authenticate peers with their identities. The last two messages are used to send and receive identities and authentication information.

In aggressive mode, the Initiator (e.g. device 106) uses the first message to inform the other party of security properties, the Diffie-Hellman public key component, identity and nonces. The second message is used by the Responder (e.g. VPN server/gateway 108) to pass selected security properties, its own Diffie-Hellman key information, nonces, its identity and any certificate information. In the third message, the Initiator authenticates itself to the Responder.

In quick mode, both parties generate keying material (e.g. keys 162 and 164) to secure the data traffic. Optionally, the Diffie-Hellman operation can be performed to support Perfect Forward Secrecy (PFS) for keys.

In communication device 106, IPSEC module 148 informs IKE module 152 if it cannot find information for the security policy in security association 156. IKE module 152 identifies the required security profile from information provided by IPSEC module 148, and extracts and stores an IP address 166 of VPN server/gateway 108 in memory 114.

Communication device 106 then initiates the phase 1 exchange. As part of the phase 1 exchange, communication device 106 and VPN server/gateway 108 identify security properties to secure the rest of the exchange in phases 1 and 2. They generate a shared secret using the Diffie-Hellman algorithm and they mutually authenticate each other using a defined authentication mode.

Once phase 1 is completed, the quick mode negotiation starts with the exchange of security policy information. Optionally, if PFS is enabled, new shared keys are generated using the Diffie-Hellman algorithm and stored as shared keys 160. Keys 162 and 164 are produced using nonces and phase 1 shared keys 160. At the end of phase 2, security associations 156 and 158 are created with keys 162 and 164, respectively, keys lifetimes, algorithms, etc., and are given to IPSEC modules 148 and 150, respectively. For example, security association 156 may include a lifetime 168 of phase 1 keys 160, a lifetime 170 of phase 2 keys 162 and a shorter lifetime 172 for keys 160 and/or 162 in case tunnel 110 is idle.

In VPN server/gateway 108, IKE module 154 receives phase 1 messages and completes phase 1 with the exchange of security properties, key exchange payload and identity payload, as part of main and aggressive mode exchanges. On receiving the phase 2 message, VPN server/gateway 108 finds out the validity of the security policy attributes it received from communication device 106, by referring to a security policy database that may be external to VPN server/gateway 108 and is not shown. If a matching inbound security policy is found, phase 2 continues and results in the creation of security association 158 with keys 164, and life times of keys 160 and 164. Security association 158 may include additional information such as algorithms.

IKE 154 informs IPSEC module 150 of the newly created security association 158. From this point onwards, tunnel 110 is considered to be established, IPSEC module 150 honors packets received from device 106, decrypts them, validates the authenticity of the packets, and sends clear packets to network 102.

If tunnel 110 is established and the life of any of keys 160, 162 and 164 expires, tunnel 110 ceases to exist. Memory 114 may optionally store a re-key time-margin parameter 174. To preserve tunnel 110 in an established state, device 106 may be triggered to renegotiate phase 1 shared keys 160 an amount of time equal to re-key time-margin parameter 174 before the expiration of phase 1 keys 160.

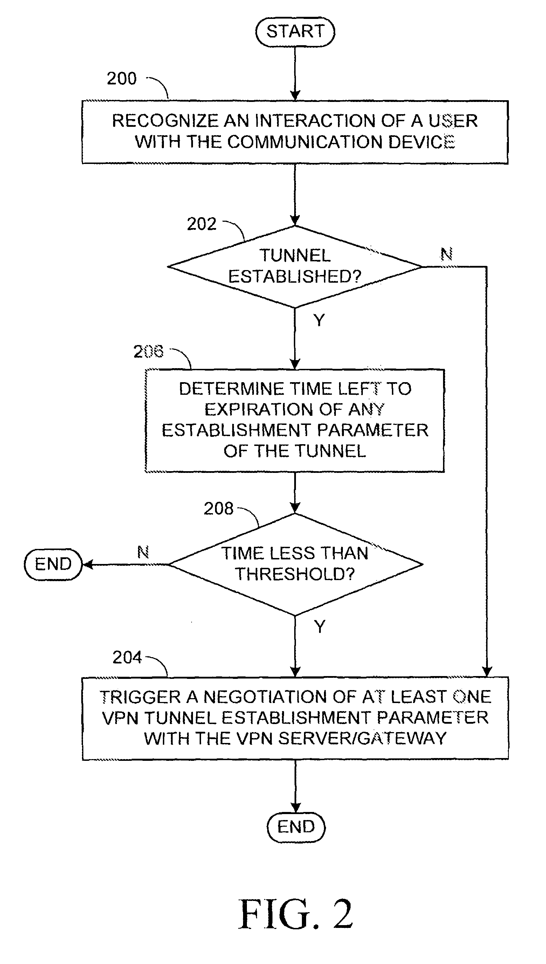

Figure 2 is a flowchart of an exemplary method in device 106, according to some embodiments of the invention. According to embodiments of the invention, memory 114 may store a time threshold 176 and an executable code 140 which, when executed by processor 102, causes device 106 to perform the method described in Figure 2.

At 200, device 106 recognizes an interaction of a user with application 132. For example, a user may attempt to launch application 132 or to provide input to application 132. If device 106 recognizes at 202 that at the time of the interaction tunnel 110 does not exist, the method continues to 204. Otherwise, at 206, device 106 determines the amount of time left until any establishment parameter of tunnel 110 will expire. For example, device 106 may determine the time until any of keys 160, 162 and/or 164 will expire.

At 208, if any establishment parameter of tunnel 110 is about to expire sooner than threshold 176, the method continues to 204. Otherwise, the method terminates. At 204, device 106 triggers a negotiation of one or more establishment parameters of tunnel 110, for example, any of keys 160, 162 and 164, to ensure tunnel 110 remains in an established state for a duration of no less than time threshold 176.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method performed by a communication device (106) that is able to establish a virtual private network 'VPN' tunnel (110) with a VPN server/gateway (108), the method comprising:
in response to an interaction of a user with a communication application (132) of said device (106), triggering a renegotiation with said server/gateway (108) of at least one establishment parameter of said tunnel (110) if at the time of said interaction said VPN tunnel (110) exists between said communication device (106) and said VPN server/gateway (108), and if any establishment parameter of said tunnel (110) will expire in less than a predefined amount of time (176), wherein said application (132) is able to communicate audio, video, control and/or gaming information with said server/gateway (108) over said tunnel (110).

2. The method of claim 1, wherein said predefined amount of time (176) is a statistical characteristic of said application (132).

3. The method of claim 1 or claim 2, wherein one of said tunnel establishment parameters is an Internet Protocol address or an encryption key (160, 162, 164).

4. The method of any one of claims 1 to 3, wherein said interaction causes said device (106) to launch said application (132) and/or wherein said interaction generates an input to said application (132) and/or wherein said interaction involves activation of at least one user input element (126) of said device (132).

5. The method of any one of claims 1 to 4, wherein said application (132) is a voice application or a video application.

6. A computer-readable medium (114) having computer-executable instructions for causing a computing device to perform the method of any one of claims 1 to 5.

7. A communication device (106) comprising:
a processor (112);
a communication interface (128) coupled to said processor (112) and arranged to communicate with a virtual private network 'VPN' server/gateway (108) over a network (104);
a memory (114) coupled to said processor (112), where said memory (114) is arranged to store a) a 'VPN' client module (134) that is arranged to establish a VPN tunnel (110) with said server/gateway (108), b) a communication application (132) that is arranged to communicate audio, video, control and/or gaming information with said server/gateway (108) over said tunnel (110), and c) executable code means (140), which when executed by said processor (112), is arranged to cause said device (106) to perform the method of any one of claims 1 to 5.

## Patentansprüche

1. Von einer Kommunikationsvorrichtung (106) durchgeführtes Verfahren, das imstande ist, einen Virtuelles-Privates-Netz-,VPN'-Tunnel (110) mit einem VPN-Server/-Gateway (108) herzustellen, wobei das Verfahren folgendes umfasst:
Auslösen einer Neuverhandlung mit dem Server/Gateway (108) von zumindest einem Herstellungsparameter des Tunnels (110) in Reaktion auf eine Interaktion eines Benutzers mit einer Kommunikationsanwendung (132) der Vorrichtung (106), wenn zum Zeitpunkt der Interaktion der VPN-Tunnel (110) zwischen der Kommunikationsvorrichtung (106) und dem VPN-Server/-Gateway (108) vorhanden ist und wenn irgendein Herstellungsparameter des Tunnels (110) in weniger als einer vordefinierten Zeitspanne (176) ausläuft, wobei die Anwendung (132) imstande ist, Audio-, Video-, Steuerungs- und/oder Spielinformation mit dem Server/Gateway (108) über den Tunnel (110) zu kommunizieren.

2. Verfahren nach Anspruch 1, wobei die vordefinierte Zeitspanne (176) eine statistische Eigenschaft der Anwendung (132) ist.

3. Verfahren nach Anspruch 1 oder Anspruch 2, wobei einer der Tunnelherstellungsparameter eine Internet-Protokoll-Adresse oder ein Kodierungsschlüssel (160, 162, 164) ist.

4. Verfahren nach irgendeinem der Ansprüche 1 bis 3, wobei die Interaktion die Vorrichtung (106) veranlasst, die Anwendung (132) zu starten, und/oder wobei die Interaktion eine Eingabe in die Anwendung (132) erzeugt und/oder wobei die Interaktion die Aktivierung von zumindest einem Benutzereingabeelement (126) der Vorrichtung (132) einschließt.

5. Verfahren nach irgendeinem der Ansprüche 1 bis 4, wobei die Anwendung (132) eine Sprachanwendung oder eine Videoanwendung ist.

6. Computerlesbares Medium (114) mit computer-ausführbaren Anweisungen, um eine Computervorrichtung zu veranlassen, das Verfahren nach irgendeinem der Ansprüche 1 bis 5 durchzuführen.

7. Kommunikationsvorrichtung (106) mit:
einem Prozessor (112);
einer Kommunikationsschnittstelle (128), die mit dem Prozessor (112) gekoppelt und dazu ausgelegt ist, mit einem Virtuelles-Privates-Netz-,VPN'-Server/-Gateway (108) über ein Netz (104) zu kommunizieren;
einem mit dem Prozessor (112) gekoppelten Speicher (114), wobei der Speicher (114) dazu ausgelegt ist, folgendes zu speichern: a) ein ,VPN'-Client-Modul (134), das dazu ausgelegt ist, einen VPN-Tunnel (110) mit dem Server/Gateway (108) herzustellen, b) eine Kommunikationsanwendung (132), die dazu ausgelegt ist, Audio-, Video-, Steuerungs- und/oder Spielinformation mit dem Server/Gateway (108) über den Tunnel (110) zu kommunizieren, und c) eine ausführbare Codeeinrichtung (140), die bei Ausführung durch den Prozessor (112) dazu ausgelegt ist, die Vorrichtung (106) zu veranlassen, das Verfahren nach irgendeinem der Ansprüche 1 bis 5 durchzuführen.

## Revendications

1. Procédé exécuté par un dispositif de communication (106) qui est en mesure d'établir un tunnel de réseau privé virtuel (110), VPN pour « *Virtual Private Network* », avec un serveur/passerelle VPN (108), le procédé comprenant les étapes consistant à :
en réponse à une interaction d'un utilisateur avec une application de communication (132) dudit dispositif (106), déclencher une renégociation d'au moins un paramètre d'établissement dudit tunnel (110) avec ledit serveur/passerelle (108) si, au moment de ladite interaction, ledit tunnel VPN (110) existe entre ledit dispositif de communication (106) et ledit serveur/passerelle VPN (108) et si l'un quelconque des paramètres d'établissement dudit tunnel (110) doit expirer avant une période de temps prédéterminée (176), dans lequel ladite application (132) est en mesure de communiquer des informations audio, vidéo, de commande et/ou de jeu avec ledit serveur/passerelle (108) via ledit tunnel (110).

2. Procédé selon la revendication 1, dans lequel ladite période de temps prédéterminée (176) est une caractéristique statistique de ladite application (132).

3. Procédé selon la revendication 1 ou la revendication 2, dans lequel un desdits paramètres d'établissement du tunnel est une adresse du protocole internet ou une clef de chiffrement (160, 162, 164).

4. Procédé selon l'une quelconque des revendications 1 à 3, dans lequel ladite interaction commande audit dispositif (106) de lancer ladite application (132) et/ou dans lequel ladite interaction produit une entrée pour ladite application (132) et/ou dans lequel ladite interaction suppose l'activation d'au moins un élément de saisie par l'utilisateur (126) dudit dispositif (106).

5. Procédé selon l'une quelconque des revendications 1 à 4, dans lequel ladite application (132) est une application vocale ou une application vidéo.

6. Support lisible par ordinateur (114) portant des instructions exécutables par ordinateur destinées à commander à un dispositif de calcul d'exécuter le procédé selon l'une quelconque des revendications 1 à 5.

7. Dispositif de communication (106) comprenant :
un processeur (112) ;
une interface de communication (128), couplée audit processeur (112) et conçue pour communiquer avec un serveur/passerelle VPN (108) via un réseau (104) ;
une mémoire (114) couplée audit processeur (112), dans lequel ladite mémoire (114) est conçue pour stocker : a) un module client VPN (134) qui est conçu pour établir un tunnel VPN (110) avec ledit serveur/passerelle (108), b) une application de communication (132) qui est conçue pour communiquer des informations audio, vidéo, de commande et/ou de jeu avec ledit serveur/passerelle (108) via ledit tunnel (110) et c) un moyen de code exécutable (140) qui, lorsqu'il est exécuté par ledit processeur (112), est conçu pour commander audit dispositif (106) d'exécuter le procédé selon l'une quelconque des revendications 1 à 5.
